# FASCICULE DE BREVET EUROPEEN

(11) **EP 2 066 882 B1**
(45) Date de publication et mention de la délivrance du brevet: **30.12.2009**
(21) Numéro de dépôt: 07823671.8
(22) Date de dépôt: 31.07.2007
(51) Int. Cl.: F01N 3/025, F01N 9/00, F02D 41/02, F02D 41/12

(54) **PROCEDE ET DISPOSITIF DE CONTROLE D'UN SYSTEME DE DEPOLLUTION ET VEHICULE MUNI DU DISPOSITIF**
VERFAHREN UND VORRICHTUNG ZUR STEUERUNG EINES ANTIVERSCHMUTZUNGSSYSTEMS UND MIT DER VORRICHTUNG AUSGESTATTETES FAHRZEUG
METHOD AND DEVICE FOR CONTROLLING AN ANTI-POLLUTION SYSTEM AND VEHICLE PROVIDED WITH THE DEVICE

(30) Priorité: 27.09.2006 FR 0608468
(43) Date de publication de la demande: 10.06.2009
(73) Titulaire: Renault SAS, 92100 Boulogne Billancourt (FR)
(72) Inventeur: PILLOT, Adrien, F-92500 Rueil Malmaison (FR); DESCAMPS, Xavier, F-91820 Boutigny Sur Essonne (FR); LIPPENS, Frédéric, F-75005 Paris (FR)
(74) Mandataire: Religieux, Vincent
(86) Numéro de dépôt international: PCT/FR2007/051759
(87) Numéro de publication internationale: WO 2008/037901

(56) Documents cités:
- EP-A- 1 582 719
- EP-A2- 1 435 443
- FR-A- 2 873 164
- FR-A1- 2 846 049
- FR-A1- 2 862 103
- FR-A1- 2 863 005
- FR-A1- 2 876 737

## Description

L'invention concerne un procédé de contrôle de la régénération d'un système de dépollution placé sur une ligne d'évacuation des gaz d'échappement d'un moteur à combustion interne.

Un domaine d'application de l'invention est la dépollution des gaz d'échappement des véhicules automobiles, notamment Diesel.

Afin de répondre à la baisse des seuils admis pour les émissions de gaz polluants des véhicules automobiles, des systèmes de post-traitement des gaz de plus en plus complexes sont disposés dans la ligne d'échappement des moteurs à mélange pauvre. Ceux-ci permettent de réduire notamment les émissions de particules et d'oxydes d'azote en plus du monoxyde de carbone et des hydrocarbures imbrûlés.

Contrairement à un catalyseur d'oxydation traditionnel, ces systèmes fonctionnent de manière discontinue ou alternative, c'est-à-dire qu'en fonctionnement normal ils piègent les polluants mais ne les traitent que lors des phases de régénération. Ainsi pour être régénéré, ces pièges nécessitent des modes de combustion spécifiques afin de garantir les niveaux thermiques et/ou de richesse nécessaires.

La régénération du filtre à particules, utilisée pour piéger puis éliminer les suies émises du moteur, nécessite une élévation de température des gaz d'échappement afin de déclencher les réactions de combustion des particules piégées. Cette phase, appelée régénération, s'effectue généralement au moyen d'une injection de réducteurs dans la ligne d'échappement, soit grâce à une injection retardée dans les cylindres appelée post injection, soit grâce à une injection directement dans la ligne d'échappement par un injecteur supplémentaire. Les réducteurs vont réagir dans un catalyseur placé en amont du filtre à particules avec l'oxygène présent dans les gaz d'échappement selon des réactions exothermiques.

Les coupures d'injections peuvent provoquer des emballements du filtre à particules lorsque une phase de régénération est en cours. En effet, l'apport soudain d'air frais dans la ligne d'échappement ainsi qu'une forte chute du régime moteur favorisent fortement la combustion des suies, et la chaleur dégagée lors des réactions est très mal évacuée par les faibles débits des gaz d'échappement dus à la diminution du régime moteur. La température du filtre augmente brutalement, empêchant tout contrôle des réactions de combustion des particules.

Le document FR-A-2 860 837 décrit un système de purification de gaz d'échappement destiné à un moteur à combustion interne, comprenant :
- un filtre disposé dans un conduit d'échappement destiné à recueillir la matière particulaire contenue dans le gaz d'échappement,
- un catalyseur ayant une fonction d'oxydation, ledit catalyseur étant prévue dans au moins l'un de l'état supporté sur ledit filtre et de l'état disposé dans ledit conduit d'échappement en amont dudit filtre,
- un moyen de régénération de filtre destiné à, lorsque la quantité de matière particulaire se déposant sur ledit filtre devient supérieure ou égale à une quantité de dépôt spécifiée, augmenter la température dudit filtre pour oxyder et éliminer la matière particulaire se déposant sur ledit filtre, et,
- un moyen d'estimation de quantité de chaleur éliminée destiné à estimer, lorsque l'état de fonctionnement dudit moteur à combustion interne passe à un fonctionnement au ralenti, tandis que la matière particulaire se déposant sur ledit filtre est oxydée et éliminée par ledit moyen de régénération de filtre, la quantité de chaleur éliminée, c'est-à-dire la quantité de chaleur emportée avec le gaz d'échappement jusqu'au moment où l'état de fonctionnement dudit moteur à combustion interne entre dans un état de fonctionnement au ralenti, parmi la quantité de chaleur générée par oxydation de la matière particulaire, sur la base de la différence entre le nombre de tours du moteur au moment du début du passage au fonctionnement au ralenti et le nombre de tours du moteur dans le fonctionnement au ralenti,
où lorsque l'état de fonctionnement dudit moteur à combustion interne passe au fonctionnement au ralenti, tandis que la matière particulaire se déposant sur ledit filtre est oxydée et enlevée par ledit moyen de régénération de filtre, si la quantité de la chaleur éliminée estimée par ledit moyen d'estimation de chaleur éliminée est supérieure ou égale à une quantité de chaleur spécifiée, l'élimination de la matière particulaire dudit filtre par ledit moyen de régénération de filtre est uniquement arrêté, et si la quantité de la chaleur éliminée estimée par ledit moyen d'estimation de chaleur éliminée est inférieure à ladite quantité de chaleur spécifiée, la concentration en oxygène dans le gaz d'échappement circulant dans ledit filtre est réduite jusqu'à un degré tel que l'oxydation de la matière particulaire se déposant sur le filtre est limitée, par au moins l'un d'une injection auxiliaire de carburant qui est exécutée dans ledit moteur à combustion interne durant une période autre que l'injection de carburant principale et d'un ajout de carburant au gaz d'échappement où le carburant est ajouté dans le gaz d'échappement en amont dudit filtre.

Dans ce système connu, la régénération est stoppée lorsque la mesure de la quantité de chaleur éliminée dépasse une valeur seuil, et la quantité d'oxygène arrivant dans le filtre à particules est diminuée par une augmentation des injections de carburant lorsque cette quantité de chaleur est en dessous de ce seuil.

Le document FR-A-2 873 164 décrit quant à lui un dispositif destiné à empêcher de surchauffer un filtre destiné à purifier un gaz d'échappement émis par un moteur à combustion interne, dans lequel le filtre filtre des matières particulaires dans le gaz d'échappement, les matières particulaires qui sont accumulées dans le filtre au cours du filtrage sont brûlées et purifiées en exécutant un traitement d'augmentation de température dans lequel le filtre est chauffé, le dispositif étant caractérisé par un moyen de prévention de surchauffe, dans lequel, pendant le traitement d'augmentation de température, le moyen de prévention de surchauffe exécute un traitement d'augmentation destiné à augmenter le débit du gaz d'échappement lorsque le filtre est susceptible de surchauffer.

Ce dispositif connu utilise une stratégie consistant à augmenter le débit des gaz d'échappement, contrôlée par une quantité d'air admise dans les cylindres, lorsqu'un emballement est pressenti.

L'invention vise à obtenir un procédé de contrôle de régénération, utilisant un dispositif de refroidissement de la température interne du filtre à particules, permettant de mieux contrôler l'emballement de celui-ci.

A cet effet, un premier objet de l'invention est un procédé de contrôle de la régénération d'un système de dépollution placé sur une ligne d'évacuation des gaz d'échappement d'un moteur à combustion interne, dans lequel, pour effectuer ladite régénération, du carburant est injecté dans les gaz d'échappement en amont du système de dépollution, et dans lequel au moins un premier capteur détecte la position de la pédale d'accélérateur et au moins un deuxième capteur détecte la température dans la ligne d'évacuation des gaz d'échappement en aval du système de dépollution,
**caractérisé en ce que**
une commande d'injection de carburant dans les gaz d'échappement en amont du système de dépollution en excès par rapport à l'oxygène est activée chaque fois que le premier capteur a détecté un passage en décélération de la pédale d'accélérateur, et est désactivée lorsque le deuxième capteur détecte une température inférieure à un seuil prescrit de détection d'emballement du système de dépollution.

Suivant d'autres caractéristiques de l'invention,
- la commande d'injection de carburant dans les gaz d'échappement est exécutée par au moins un injecteur supplémentaire de carburant, disposé sur la ligne d'évacuation des gaz d'échappement, en amont du système de dépollution ;
- la commande d'injection de carburant dans les gaz d'échappement est exécutée au moins par une injection retardée de carburant dans au moins une chambre de combustion du moteur ;
- le système de dépollution comprend un filtre à particules ;
- ladite commande d'injection de carburant dans les gaz d'échappement en amont du système de dépollution en excès par rapport à l'oxygène est activée avec une quantité de carburant injectée suffisamment grande pour que la majeure partie du carburant injecté reste à l'état liquide dans la ligne d'évacuation des gaz d'échappement.

Un deuxième objet de l'invention est un dispositif de contrôle de la régénération d'un système de dépollution placé sur une ligne d'évacuation des gaz d'échappement d'un moteur à combustion interne, selon un procédé tel que décrit ci-dessus, **caractérisé en ce qu**'il comporte au moins un dispositif d'injection pour injecter du carburant dans la ligne d'évacuation des gaz d'échappement en amont du système de dépollution, au moins un premier capteur de détection de la position de la pédale d'accélérateur du moteur, au moins un deuxième capteur de détection de la température dans la ligne d'évacuation des gaz d'échappement en aval du système de dépollution, un moyen de commande du dispositif d'injection pour injecter du carburant en excès par rapport à l'oxygène dans la ligne d'évacuation des gaz d'échappement en amont du système de dépollution, ce moyen de commande d'injection étant sensible uniquement aux premier et deuxième capteurs, pour être activé par le fait que le premier capteur de position de la pédale d'accélérateur a détecté un passage en décélération de celle-ci, et être désactivé par le fait que le deuxième capteur de température dans la ligne d'évacuation des gaz d'échappement en aval du système de dépollution a détecté une température inférieure à un seuil prescrit de détection d'emballement du système de dépollution.

Suivant d'autres caractéristiques,
- le dispositif d'injection de carburant comprend au moins un injecteur supplémentaire de carburant disposé sur la ligne d'évacuation des gaz d'échappement en amont du système de dépollution ;
- le dispositif d'injection de carburant comprend au moins un injecteur de carburant dans au moins une chambre de combustion du moteur.

Un troisième objet de l'invention est un véhicule automobile équipé d'un moteur à combustion interne, d'une ligne d'évacuation des gaz d'échappement du moteur, sur laquelle est placé un système de dépollution, **caractérisé en ce que** le véhicule est équipé du dispositif de contrôle de la régénération du système de dépollution tel que décrit ci-dessus.

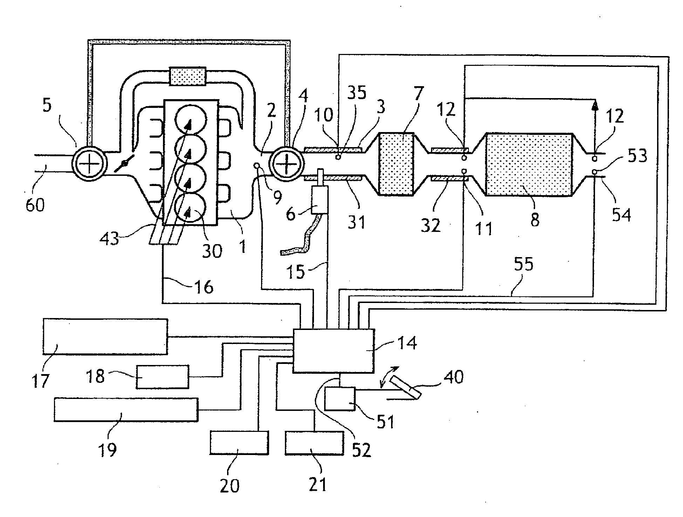

L'invention sera mieux comprise à la lecture de la description qui va suivre, faite uniquement à titre d'exemple non limitatif, en référence au dessin annexé, dont l'unique figure représente schématiquement l'architecture générale d'une ligne d'échappement d'un véhicule automobile.

La figure illustre de façon non limitative l'application de l'invention sur un moteur de véhicule.

Sur cette figure, un moteur 1 à combustion interne à quatre cylindres 30 comporte une sortie 2 de gaz d'échappement, reliée à une ligne 3 d'évacuation de ceux-ci. Par exemple, et de manière non obligatoire, le moteur 1 est équipé d'un turbocompresseur comportant une turbine 4 interposée entre la sortie 2 et la ligne 3 et un compresseur 5 interposé sur l'entrée 6 d'admission du moteur.

La ligne 3 d'échappement comporte, successivement dans le sens d'évacuation des gaz d'échappement depuis la sortie 2, une première section 31 sur laquelle se trouve un injecteur supplémentaire 6 de carburant à l'échappement, dit .5^{ème} injecteur, un catalyseur 7 d'oxydation, une deuxième section de ligne 32 et un filtre à particules 8. Au lieu ou en plus du catalyseur 7, le moyen de catalyse d'oxydation peut être, dans un mode de réalisation non représenté, un matériau de catalyse d'oxydation dans le filtre 8 à particules.

Il est également prévu un capteur 9 de température sur la sortie 2 en amont de la ligne 3 et de la turbine 4 , une sonde 10 à oxygène sur la première section 31, un capteur 11 de température T_{efap} d'entrée de filtre à particules sur la deuxième section 32, et un capteur de pression différentielle 12 pour mesurer la différence de pression entre l'entrée du filtre 8 sur la deuxième section 32 et la sortie 54 de ce filtre 8. Les signaux de mesure fournis par ces capteurs 9, 10, 11, 12 sont envoyés au calculateur 14 (ou unité électronique de commande ECU) embarqué pour traitement.

Il est également prévu un capteur 51 de détection de la position de la pédale 40 d'accélérateur du moteur, fournissant ses informations de détection au calculateur 14 par une ligne 52. En outre, un capteur de température 53 est prévu dans la ligne 3 dans la section 54 de la ligne 3 d'échappement, située en aval du filtre à particules 8, et par exemple à la sortie de celui-ci. Le capteur 53 de détection de la température TsFàP dans la ligne 3 en aval du système 8 de dépollution transmet ses informations de détection à l'unité de commande par une ligne 55. Le calculateur 14 commande l'injecteur supplémentaire 6, ainsi que cela est symbolisé par la ligne 15 de commande, et également l'injection du carburant dans les chambres 30 de combustion du moteur 1, ainsi que cela est symbolisé par la ligne 16 de commande. Ce calculateur 14 peut également servir à traiter d'autres informations en provenance de consommateurs électriques 17, du groupe moto ventilateur 18, d'un thermostat piloté 19, et de capteurs de température atmosphérique et de pression atmosphérique 20, 21.

Suivant l'invention, lorsque le capteur 51 de détection de position de la pédale 40 d'accélérateur détecte un lâcher de pied, le calculateur 14 active la commande d'injection à l'échappement.

Cette commande d'injection de carburant est envoyée sur la ligne 15 et/ou sur la ligne 16, pour provoquer l'injection de carburant dans la ligne 3 d'évacuation des gaz d'échappement soit par l'injecteur supplémentaire 6 en amont du catalyseur d'oxydation directement dans la ligne 3, soit par la post injection 43 dans un ou les cylindres 30 du moteur, cette post injection 43 entraînant l'injection retardée de carburant dans au moins une chambre 30 de combustion du moteur 1, correspondant à une injection supplémentaire dans ceux-ci pendant la phase de détente du ou des cylindres 30, pour faire passer du carburant vers la sortie 2.

Le capteur 53 de température TsFàP en sortie du filtre 8 permet de contrôler la chute de température due à l'actuateur formé par le ou les moyens 6, 43 d'injection de carburant.

La commande d'injection, effectuée par le calculateur 14, est désactivée lorsque la température TsFàP mesurée par le capteur 53 en aval du filtre 8 descend sous une valeur prédéterminée.

On refroidit ainsi les parois internes du filtre 8 à particules par une injection de carburant froid en amont du filtre 8, de sorte que le carburant soit en excès par rapport à l'oxygène dans la ligne 3, ce qui correspond à un mode de fonctionnement du moteur à une richesse supérieure à 1 ou à un mélange stoechiométrique.

La quantité de carburant injectée étant suffisamment importante pour que la majeure partie de celui-ci reste à l'état liquide dans la ligne 3, le refroidissement des gaz d'échappement circulant dans le filtre 8 à particules est ainsi plus rapide. De plus, le fait de projeter du carburant sur les parois du filtre 8 permet de faire baisser sa température lors de la vaporisation de celui-ci. L'élévation rapide de la température des parois du filtre et du gaz le traversant est ainsi parfaitement maîtrisée.

Le fait d'utiliser un liquide plutôt qu'un gaz permet de fortement accroître la cinétique du transfert thermique. C'est-à-dire que la chaleur sera plus facilement éliminée au moyen d'un liquide plutôt que d'un gaz de part sa plus forte capacité calorifique. De plus, le liquide possède la capacité de bien adhérer sur les parois ce qui permet une meilleure protection thermique du filtre, prévenant toute rupture physique due à des températures trop élevées. On obtient ainsi un moyen rapide d'éliminer tout l'oxygène présent dans la ligne d'échappement ou dans le filtre par le changement de mode de combustion du moteur en mélange riche.

## Revendications

1. Procédé de contrôle de la régénération d'un système (8) de dépollution placé sur une ligne (3) d'évacuation des gaz d'échappement d'un moteur (1) à combustion interne, dans lequel, pour effectuer ladite régénération, du carburant est injecté dans les gaz d'échappement en amont du système (8) de dépollution, et dans lequel au moins un premier capteur (51) détecte la position de la pédale d'accélérateur et au moins un deuxième capteur (53) détecte la température dans la ligne (3) d'évacuation des gaz d'échappement en aval du système (8) de dépollution,
**caractérisé en ce que**
une commande d'injection de carburant dans les gaz d'échappement en amont du système (8) de dépollution en excès par rapport à l'oxygène est activée chaque fois que le premier capteur (51) a détecté un passage en décélération de la pédale d'accélérateur, et est désactivée lorsque le deuxième capteur (53) détecte une température inférieure à un seuil prescrit de détection d'emballement du système de dépollution.

2. Procédé de contrôle suivant la revendication 1, **caractérisé en ce que** la commande d'injection de carburant dans les gaz d'échappement est exécutée par au moins un injecteur supplémentaire (6) de carburant, disposé sur la ligne (3) d'évacuation des gaz d'échappement, en amont du système (8) de dépollution.

3. Procédé de contrôle suivant l'une quelconque des revendications 1 ou 2, **caractérisé en ce que** la commande d'injection de carburant dans les gaz d'échappement est exécutée au moins par une injection retardée (43) de carburant dans au moins une chambre (30) de combustion du moteur.

4. Procédé de contrôle suivant l'une quelconque des revendications précédentes, **caractérisé en ce que** le système de dépollution comprend un filtre (8) à particules.

5. Procédé de contrôle suivant l'une quelconque des revendications précédentes, **caractérisé en ce que** ladite commande d'injection de carburant dans les gaz d'échappement en amont du système (8) de dépollution en excès par rapport à l'oxygène est activée avec une quantité de carburant injectée suffisamment grande pour que la majeure partie du carburant injecté reste à l'état liquide dans la ligne (3) d'évacuation des gaz d'échappement.

6. Dispositif de contrôle de la régénération d'un système de dépollution placé sur une ligne d'évacuation des gaz d'échappement d'un moteur à combustion interne, selon un procédé suivant l'une quelconque des revendications précédentes, **caractérisé en ce qu'**il comporte au moins un dispositif (6, 43) d'injection pour injecter du carburant dans la ligne (3) d'évacuation des gaz d'échappement en amont du système (8) de dépollution, au moins un premier capteur (51) de détection de la position de la pédale d'accélérateur du moteur, au moins un deuxième capteur (53) de détection de la température dans la ligne (3) d'évacuation des gaz d'échappement en aval du système (8) de dépollution, un moyen (14) de commande du dispositif (6, 43) d'injection pour injecter du carburant en excès par rapport à l'oxygène dans la ligne (3) d'évacuation des gaz d'échappement en amont du système (8) de dépollution, ce moyen (14) de commande d'injection étant sensible uniquement aux premier et deuxième capteurs (51, 53), pour être activé par le fait que le premier capteur (51) de position de la pédale d'accélérateur a détecté un passage en décélération de celle-ci, et être désactivé par le fait que le deuxième capteur (53) de température dans la ligne (3) d'évacuation des gaz d'échappement en aval du système (8) de dépollution a détecté une température inférieure à un seuil prescrit de détection d'emballement du système (8) de dépollution.

7. Dispositif de contrôle suivant la revendication 6, **caractérisé en ce que** le dispositif (6, 43) d'injection de carburant comprend au moins un injecteur supplémentaire (6) de carburant disposé sur la ligne (3) d'évacuation des gaz d'échappement en amont du système (8) de dépollution.

8. Dispositif de contrôle suivant l'une quelconque des revendications 6 et 7, **caractérisé en ce que** le dispositif (6, 43) d'injection de carburant comprend au moins un injecteur de carburant dans au moins une chambre (30) de combustion du moteur.

9. Dispositif de contrôle suivant l'une quelconque des revendications 6 à 8, **caractérisé en ce que** le système de dépollution comprend un filtre (8) à particules.

10. Véhicule automobile équipé d'un moteur (1) à combustion interne, d'une ligne (3) d'évacuation des gaz d'échappement du moteur, sur laquelle est placé un système (8) de dépollution, **caractérisé en ce que** le véhicule est équipé du dispositif de contrôle de la régénération du système de dépollution suivant l'une quelconque des revendications 6 à 9.

## Claims

1. Method for controlling the regeneration of an anti-pollution system (8) positioned on a line (3) for discharging the exhaust gases from an internal combustion engine (1), in which, in order to perform the said regeneration, fuel is injected into the exhaust gases upstream of the anti-pollution system (8) and in which at least one first sensor (51) detects the position of the accelerator pedal and at least one second sensor (53) detects the temperature in the line (3) discharging the exhaust gases downstream of the anti-pollution system (8),
**characterized in that**
a command to inject fuel into the exhaust gases upstream of the anti-pollution system (8) in excess with respect to the oxygen is activated each time the first sensor (51) has detected that the accelerator pedal has switched to deceleration, and is deactivated when the second sensor (53) detects a temperature below a prescribed threshold for detecting that reactions in the anti-pollution system are in runaway.

2. Control method according to Claim 1, **characterized in that** the command to inject fuel into the exhaust gases is executed by at least one additional fuel injector (6) positioned on the line (3) discharging the exhaust gases, upstream of the anti-pollution system (8).

3. Control method according to either one of Claims 1 and 2, **characterized in that** the command to inject fuel into the exhaust gases is executed by at least one retarded injection (43) of fuel into at least one combustion chamber (30) of the engine.

4. Control method according to any one of the preceding claims, **characterized in that** the anti-pollution system comprises a particulate filter (8).

5. Control method according to any one of the preceding claims, **characterized in that** the said command to inject fuel into the exhaust gases upstream of the anti-pollution system (8) in excess with respect to the oxygen is activated with a sufficiently large amount of fuel being injected that most of the injected fuel remains in the liquid state in the exhaust gas discharge line (3).

6. Device for controlling the regeneration of an anti-pollution system positioned on a line for discharging the exhaust gases from an internal combustion engine, according to a method according to any one of the preceding claims, **characterized in that** it comprises at least one injection device (6, 43) for injecting fuel into the exhaust gas discharge line (3) upstream of the anti-pollution system (8), at least one first sensor (51) for detecting the position of the accelerator pedal of the engine, at least one second sensor (53) for detecting the temperature in the exhaust gas discharge line (3) downstream of the anti-pollution system (8), a means (14) of controlling the injection device (6, 43) to inject fuel in excess with respect to the oxygen in the exhaust gas discharge line (3) upstream of the anti-pollution system (8), this injection control means (14) being responsive only to the first and second sensors (51, 53) so as to be activated by the fact that the first sensor (51) that senses the position of the accelerator pedal, has detected that this pedal has switched to deceleration, and so as to be deactivated by the fact that the second sensor (53) that senses the temperature in the exhaust gas discharge line (3) downstream of the anti-pollution system (8) has detected a temperature below a prescribed threshold for detecting that the reactions in the anti-pollution system (8) are in runaway.

7. Control device according to Claim 6, **characterized in that** the fuel injection device (6, 43) comprises at least one additional fuel injector (6) positioned in the exhaust gas discharge line (3) upstream of the anti-pollution system (8).

8. Control device according to either one of Claims 6 and 7, **characterized in that** the fuel injection device (6, 43) comprises at least one fuel injector in at least one combustion chamber (30) of the engine.

9. Control device according to any one of Claims 6 to 8, **characterized in that** the anti-pollution system comprises a particulate filter (8).

10. Motor vehicle equipped with an internal combustion engine (1), with a line (3) for discharging the exhaust gases from the engine, on which line an anti-pollution system (8) is positioned, **characterized in that** the vehicle is equipped with the device for controlling the regeneration of the anti-pollution system according to any one of Claims 6 to 9.

## Patentansprüche

1. Verfahren zur Steuerung der Regeneration eines Abgasreinigungssystems (8), das an einer Ausströmleitung (3) für Abgase eines Verbrennungsmotors (1) platziert ist, wobei zur Bewirkung der Regeneration Kraftstoff stromaufwärts des Abgasreinigungssystems (8) in die Abgase gespritzt wird und wobei mindestens ein erster Sensor (51) die Position des Fahrpedals erfasst und mindestens ein zweiter Sensor (53) die Temperatur in der Ausströmleitung (3) für die Abgase stromabwärts des Abgasreinigungssystems (8) erfasst,
**dadurch gekennzeichnet, dass**
eine Betätigung zum Einspritzen von Kraftstoff in die Abgase stromaufwärts des Abgasreinigungssystems (8) im Überschuss bezüglich des Sauerstoffs jedes Mal dann aktiviert wird, wenn der erste Sensor (51) einen Abbremsvorgang des Fahrpedals erfasst hat, und deaktiviert wird, wenn der zweite Sensor (53) eine Temperatur erfasst hat, die unter einem vorgeschriebenen Schwellwert zur Erfassung des Hochlaufens des Abgasreinigungssystems liegt.

2. Steuerverfahren nach Anspruch 1, **dadurch gekennzeichnet, dass** die Betätigung zum Einspritzen von Kraftstoff in die Abgase durch mindestens ein zusätzliches Kraftstoffeinspritzventil (6) durchgeführt wird, das an der Ausströmleitung (3) für Abgase stromaufwärts des Abgasreinigungssystems (8) angeordnet ist.

3. Steuerverfahren nach Anspruch 1 oder 2, **dadurch gekennzeichnet, dass** die Betätigung zum Einspritzen von Kraftstoff in die Abgase mindestens durch eine verzögerte Einspritzung (43) von Kraftstoff in mindestens eine Brennkammer (30) des Motors durchgeführt wird.

4. Steuerverfahren nach einem der vorhergehenden Ansprüche, **dadurch gekennzeichnet, dass** das Abgasreinigungssystem einen Teilchenfilter (8) umfasst.

5. Steuerverfahren nach einem der vorhergehenden Ansprüche, **dadurch gekennzeichnet, dass** die Betätigung zum Einspritzen von Kraftstoff in die Abgase stromaufwärts des Abgasreinigungssystems (8) im Überschuss bezüglich des Sauerstoffs mit einer Kraftstoffmenge aktiviert wird, die groß genug ist, damit der Hauptteil des eingespritzten Kraftstoffes in der Ausströmleitung (3) für Abgase im flüssigen Zustand bleibt.

6. Vorrichtung zur Steuerung der Regeneration eines Abgasreinigungssystems, das an einer Ausströmleitung für Abgase eines Verbrennungsmotors platziert ist, gemäß einem Verfahren nach einem der vorhergehenden Ansprüche, **dadurch gekennzeichnet, dass** sie mindestens eine Vorrichtung (6, 43) zum Einspritzen des Kraftstoffs in eine Ausströmleitung (3) für Abgase stromaufwärts des Abgasreinigungssystems (8), mindestens einen ersten Sensor (51) zur Erfassung der Position des Fahrpedals des Motors, mindestens einen zweiten Sensor (53) zur Erfassung der Temperatur in der Ausströmleitung (3) für Abgase stromabwärts des Abgasreinigungssystems (8) und ein Mittel (14) zur Betätigung der Einspritzvorrichtung (6, 43) zum Einspritzen des Kraftstoffs im Überschuss bezüglich des Sauerstoffs in die Ausströmleitung (3) für Abgase stromaufwärts des Abgasreinigungssystems (8) umfasst, wobei dieses Mittel (14) zur Betätigung des Einspritzens im Wesentlichen allein auf den ersten und zweiten Sensor (51, 53) reagiert, um dadurch aktiviert zu werden, dass der erste Sensor (51) zur Erfassung der Position des Fahrpedals einen Abbremsvorgang desselben erfasst hat, und dadurch deaktiviert zu werden, dass der zweite Sensor (53) zur Erfassung der Temperatur in der Ausströmleitung (3) für Abgase stromabwärts des Abgasreinigungssystems (8) eine Temperatur erfasst hat, die unter einem vorgeschriebenen Schwellwert zur Erfassung des Hochlaufens des Abgasreinigungssystems (8) liegt.

7. Steuervorrichtung nach Anspruch 6, **dadurch gekennzeichnet, dass** die Vorrichtung (6, 43) zum Einspritzen von Kraftstoff mindestens ein zusätzliches Kraftstoffeinspritzventil (6) umfasst, das an der Ausströmleitung (3) für Abgase stromaufwärts des Abgasreinigungssystems (8) angeordnet ist.

8. Steuervorrichtung nach einem der Ansprüche 6 und 7, **dadurch gekennzeichnet, dass** die Vorrichtung (6, 43) zum Einspritzen des Kraftstoffs mindestens ein Kraftstoffeinspritzventil in mindestens einer Brennkammer (30) des Motors umfasst.

9. Steuervorrichtung nach einem der Ansprüche 6 bis 8, **dadurch gekennzeichnet, dass** das Abgasreinigungssystem einen Teilchenfilter (8) umfasst.

10. Kraftfahrzeug, das mit einem Verbrennungsmotor (1) und einer Ausströmleitung (3) für Abgase des Motors, an der das Abgasreinigungssystem (8) platziert ist, ausgestattet ist, **dadurch gekennzeichnet, dass** das Fahrzeug mit der Vorrichtung zur Steuerung der Regeneration des Abgasreinigungssystems nach einem der Ansprüche 6 bis 9 ausgestattet ist.
